# EUROPÄISCHE PATENTANMELDUNG

(11) **EP 1 832 496 A1**
(43) Veröffentlichungstag der Anmeldung: **12.09.2007**
(21) Anmeldenummer: 07001828.8
(22) Anmeldetag: 29.01.2007
(51) Int. Cl.: B62D 3/12, F16H 55/28

(54) **Druckstückeinheit für ein Lenkgetriebe**

(30) Priorität: 09.03.2006 DE 102006011382
(71) Anmelder: ThyssenKrupp Presta SteerTec GmbH, 40476 Düsseldorf (DE)
(72) Erfinder: Lubojatzky, Thomas, 70565 Stuttgart (DE); Poppe, Frank, 73230 Kirchheim Teck (DE); Willared, Stefan, 91352 Pautzfeld (DE)
(74) Vertreter: LENZING GERBER

(57) **Zusammenfassung**

Die Erfindung betrifft eine Druckstückeinheit für ein Lenkgetriebe, umfassend ein Druckstückgehäuse (1a), ein zu dem Druckstückgehäuse (1a) verschiebbar aufgenommenes Druckstück (6) mit Wirkflächen (7) zur Anlage an einer Zahnstange (2), und eine hydraulische Dämpfungseinheit (10), wobei die hydraulische Dämpfungseinheit (10) einen Hochdruckraum (14), einen Niederdruckraum (15) und eine zwischen Hochdruckraum und Niederdruckraum angeordnete Drossel (13) umfasst, wobei Hochdruckraum (14), Niederdruckraum (15) und Drossel (13) in einem von dem Druckstückgehäuse (1a) und dem Druckstück (6) gebildeten Bereich angeordnet sind, wobei die Druckstückeinheit (5) einen Druckanschluss (16) umfasst, wobei der Niederdruckraum (15) zumindest wahlweise über den Druckanschluss (16) durch eine externe Quelle mit Druck beaufschlagbar ist.

## Beschreibung

Die vorliegende Erfindung betrifft eine Druckstückeinheit für ein Lenkgetriebe nach dem Oberbegriff des Anspruchs 1.

Beim Bau von Lenkgetrieben für Kraftfahrzeuge werden immer höhere Anforderungen an Spielfreiheit, Verschleißfestigkeit und Dämpfungscharakteristik gestellt.

DE 102 08 947 A1 beschreibt eine Druckstückeinheit für ein Lenkgetriebe, die neben einer Schraubenfeder zur Kraftbeaufschlagung eines Druckstücks in Richtung einer Zahnstange zudem eine hydraulische Dämpfungseinheit aufweist. Die hydraulische Dämpfungseinheit umfasst einen Hochdruckraum und einen Niederdruckraum, die über ein Rückschlagventil und eine Drossel voneinander getrennt sind. Die hydraulische Dämpfungseinheit ist vollständig innerhalb der Druckstückeinheit angeordnet und gekapselt. Eine Einstellbarkeit der Druckstückeinheit hinsichtlich ihrer Dämpfungscharakteristik ist somit nicht gegeben.

Es ist die Aufgabe der Erfindung, eine Druckstückeinheit für ein Lenkgetriebe bereitzustellen, bei der eine hydraulische Dämpfung auf besonders flexible Weise ermöglicht ist.

Diese Aufgabe wird für ein eingangs genanntes Druckstück erfindungsgemäß durch die kennzeichnenden Merkmale des Anspruchs 1 gelöst. Durch den Druckanschluss zur Beaufschlagung des Niederdruckraums mit einem Druck einer externen Quelle ist eine durch die hydraulische Dämpfungseinheit bedingte Andruckkraft des Druckstück variabel einstellbar. Je nach verwendeter Dämpfungsflüssigkeit kann auch die Charakteristik der Dämpfungseinheit in Abhängigkeit von dem Druckniveau des Niederdruckraums veränderbar sein. Ein weiterer Vorteil besteht darin, dass ein über die Lebensdauer des Lenkgetriebes auftretender Verschleiß in seinen Auswirkungen durch eine entsprechende Nachregelung des beaufschlagten Drucks zumindest teilweise gemindert werden kann. So kann etwa bei zunehmender Abnutzung der Zahnflanken von Lenkritzel und Zahnstange die Andruckkraft des Druckstücks ohne Wartungsmaßnahmen erhöht werden, um eine ausreichende Spielfreiheit zu erhalten. Zudem ergibt sich der Vorteil, dass bei der erfindungsgemäßen Druckstückeinheit die hydraulische Dämpfungseinheit vollständig in einem von dem Druckstückgehäuse und dem Druckstück gebildeten Bereich aufgenommen ist, so dass bei einem permanenten Verschluss des Druckanschlusses eine an sich bekannte gekapselte hydraulische Dämpfung mit unveränderlicher Dämpfungscharakteristik vorliegt. Somit stellt die erfindungsgemäße Druckstückeinheit ein Modul für Lenkgetriebe dar, das einerseits mit variabler einstellbarer Dämpfungscharakteristik und andererseits ohne variabel einstellbare Dämpfungscharakteristik verwendbar ist. Hierdurch lassen sich im Zuge einer vereinheitlichten Massenproduktion der Druckstückeinheit Kosten sparen.

In vorteilhafter Ausgestaltung weist die hydraulische Dämpfungseinheit ein Zylinderelement und ein in dem Zylinderelement geführtes Kolbenelement auf, wobei die Drossel im wesentlichen durch einen zwischen Kolbenelement und Zylinderelement vorgesehenen Spalt ausgebildet ist. Diese Bauweise ist raumsparend und zuverlässig. Besonders vorteilhaft ist dabei zwischen dem Hochdruckraum und dem Niederdruckraum ein Ventil mit einer Durchlass- und einer Sperrrichtung vorgesehen, so dass die Dämpfungswirkung der Dämpfungseinheit lediglich in der Sperrrichtung des Ventils vorliegt, wogegen eine Bewegung in Durchlassrichtung einen nur geringen Widerstand zwischen Kolbenelement und Zylinderelement bedingt.

Weiterhin vorteilhaft weist das Gehäuse einen insbesondere schraubbaren Boden auf. Die Schraubbarkeit des Bodens ermöglicht auf einfache Weise eine Feinjustage der Druckstückeinheit, die im allgemeinen bei einer ersten Montage erfolgt, sowie allgemein eine einfache Montage. Vorteilhaft ist der Druckanschluss an dem Boden angeordnet, wodurch sich eine einfache Bauweise ergibt. Ebenso ist eine einfache Konstruktion dadurch gegeben, dass der Niederdruckraum bevorzugt unmittelbar an den Boden anschließt.

In bevorzugter Ausführung ist im Interesse einer einfachen und raumsparenden Konstruktion das Zylinderelement gegen das Druckstück abgestützt.

Allgemein bevorzugt ist das Druckstück mittels eines Federelements gegen das Gehäuse abgestützt. Hierdurch lässt sich die Überlagerung einer elastisch federnden Dämpfung mit einer hydraulischen Dämpfung erzielen, was eine besonders geeignete Dämpfungskennlinie ergibt. In alternativer Ausführung kann jedoch auch kein Federelement vorgesehen sein, welches einerseits an dem Druckstück und andererseits an dem Gehäuse abgestützt ist. Hierdurch wird die Dämpfung des Druckstücks hauptsächlich oder ausschließlich durch die hydraulische Dämpfungseinheit bewirkt, was zu einem Einsparen von Bauteilen führt. Zur Erlangung einer ausreichenden Dämpfungskraft ist bei einer solchen Ausführung die wirksame Querschnittsfläche des Kolbenelements der hydraulischen Dämpfungseinheit gegebenenfalls entsprechend anzupassen.

Allgemein vorteilhaft kann es vorgesehen sein, dass der Druckanschluss mit einem Hydrauliksystem einer hydraulischen Lenkkraftunterstützung verbunden ist. Hierdurch kann auf eine eigene Druckquelle der Druckstückeinheit verzichtet werden. Alternativ kann der Druckanschluss in diesem Sinne auch mit einem Öldruck eines Fahrzeughauptmotors beaufschlagt sein oder mit einer beliebigen anderen vorhandenen Druckquelle des Fahrzeugs.

In weiterhin alternativer Ausführung kann der Druckanschluss eine eigene Hydraulikpumpe aufweisen, mittels der er einstellbar druckbeaufschlagbar ist.

In vorteilhafter Ausführung ist der Druckanschluss mit einem betätigbaren Absperrventil verbunden. Hierdurch ist es ermöglicht, dass die hydraulische Dämpfungseinheit nur einmal mit einem geeigneten Vordruck beaufschlagt wird, wonach durch Betätigung des Absperrventils dieser Vordruck dauerhaft gehalten wird. Insbesondere bei einer solchen Anordnung kann die Kombination mit einer im Fahrzeug bereits für andere Zwecke vorhandenen Druckquelle vorteilhaft sein. Solche Hydraulikquellen stellen oft nicht Dauerhaft den erwünschten Vordruck der hydraulischen Dämpfungseinheit bereit. Jedoch können sie entweder gezielt oder durch Abwarten eines entsprechenden Betriebsmodus einen geeigneten Druck erzeugen, der dann über das betätigbare Absperrventil dauerhaft gekapselt an der hydraulischen Dämpfungseinheit anliegt. Hierzu kann insbesondere zwischen dem Druckanschluss und dem Absperrventil ein Speicherraum vorliegen, so dass der niederdruckraumseitige Druck im wesentlichen unabhängig von einer Auslenkung des Kolbenelements konstant ist.

In bevorzugter Ausführung einer erfindungsgemäßen Druckstückeinheit ist der in dem Niederdruckraum über den Druckanschluss anliegende Druck in Abhängigkeit von einer Fahrsituation, insbesondere einer Fahrgeschwindigkeit, veränderbar. Hierdurch lässt sich eine je nach Fahrbetrieb unterschiedlichen Anforderungen unterworfene Andruckkraft und Dämpfung zwischen Lenkungsritzel und Zahnstange bereitstellen.

Weitere Vorteile und Merkmale ergeben sich aus dem nachfolgend beschriebenen Ausführungsbeispiel sowie aus den abhängigen Ansprüchen.

Nachfolgend wird ein bevorzugtes Ausführungsbeispiel einer erfindungsgemäßen Druckstückeinheit beschrieben und anhand der anliegenden Zeichnungen näher erläutert.
- Fig. 1: zeigt einen Querschnitt durch ein Lenkgetriebe mit einer Druckstückeinheit.
- Fig. 2: zeigt einen Querschnitt durch das Druckstück aus Fig. 1.

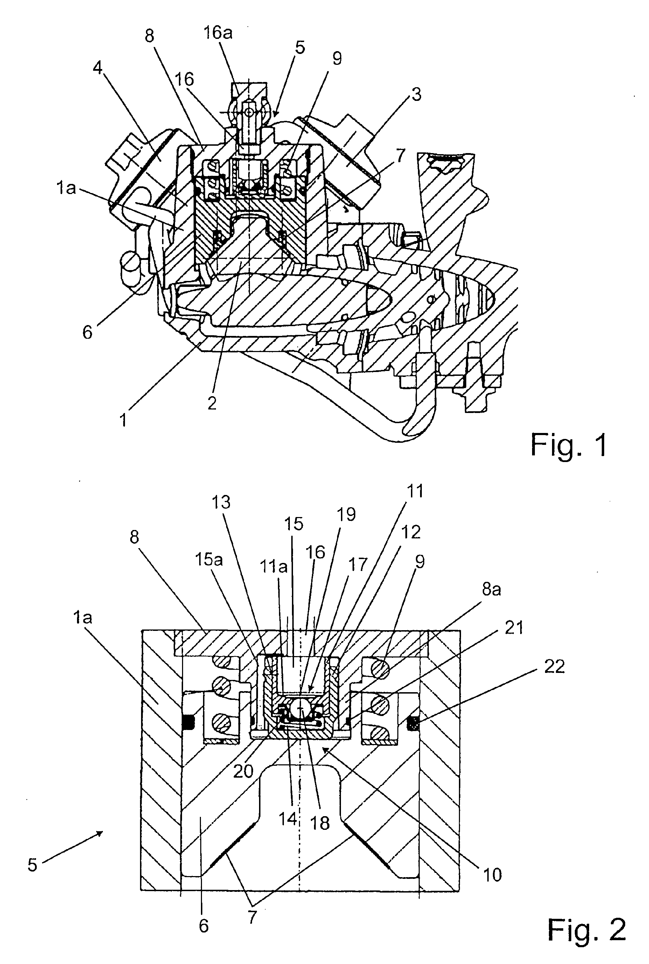

Das in Fig. 1 dargestellte Lenkgetriebe hat ein Lenkgetriebegehäuse 1, in dem eine Zahnstange 2 der Lenkung längsverschieblich geführt ist. Über Anschlüsse 3, 4 sind Hydraulikleitungen mit einer Kolben-Zylinder-Einheit des Lenkgetriebes verbunden, wobei die Kolben-Zylinder-Einheit eine Verlängerung der Zahnstange darstellt und auf an sich bekannte Weise eine hydraulische Kraftunterstützung der Lenkung ermöglicht.

Die Zahnstange 2 kämmt mit einem nicht dargestellten Lenkritzel auf an sich bekannte Weise, wobei die Zahnstange 2 durch eine Druckstückeinheit 5 gegen das Lenkritzel gedrückt wird um ein Spiel zwischen Zahnstange 2 und Lenkritzel zu vermeiden oder zu verringern. Hierzu umfasst die Druckstückeinheit 5 ein Druckstück 6, welches in einem mit dem Lenkgetriebegehäuse 1 einheitlich ausgebildeten Gehäuse 1a der Druckstückeinheit 5 längsverschieblich geführt ist. Das Druckstück 6 greift mittels aus einem Elastomer bestehender Wirkflächen 7 an der Zahnstange 2 an. Die Ausformung der Angriffsbereiche zwischen Druckstück 5 und Zahnstange 2 kann unabhängig von der vorliegenden Erfindung auf beliebige geeignete Weise erfolgen.

Eine der Zahnstange 2 entgegengesetzte Öffnung des Gehäuses 1a ist mittels eines schraubbaren Bodens 8 verschlossen, so dass das Druckstück 6 zwischen der Zahnstange 2 und dem Boden 8 angeordnet ist. Der Boden 8 ist im montierten Zustand als Teil des Gehäuses 1a anzusehen. Eine Feder 9 ist einerseits gegen das Druckstück 6 und andererseits den Boden 8 abgestützt, so dass eine Kraftbeauschlagung der Zahnstange 2 durch die Feder 9 über das Druckstück 6 erfolgt.

Innerhalb der Windungen der schraubenförmigen Feder 9 ist eine hydraulische Dämpfungseinheit 10 der Druckstückeinheit 5 angeordnet. Die Dämpfungseinheit 10 umfasst ein Kolbenelement 11 mit einer zylindrischen Außenwandung, welches in einem korrespondierenden Zylinderelement 12 mit zylindrischer Innenwandung geführt ist. Zwischen der Außenwandung des Kolbenelements 11 und der Innenwandung des Zylinderelements 12 verbleibt ein geringer Spalt 13 von definierter Größe, der eine Drossel der hydraulischen Dämpfungseinheit 10 ausbildet.

Das Zylinderelement 12 ist als im Querschnitt U-förmiger Topf ausgebildet, dessen Boden gegen das Druckstück 6 abgestützt ist. Das Kolbenelement 11 weist einen H-förmigen Querschnitt auf, wobei ein Zwischenboden 11a durch den Querbalken des "H" ausgebildet ist. Im ineinander geschobenen Zustand von Kolbenelement 11 und Zylinderelement 12 wird zwischen dem Boden des Zylinderelements 12 und dem Zwischenboden 11a des Kolbenelements 11 ein Hochdruckraum 14 ausgebildet. Der bezüglich des Zwischenbodens 11a jenseitige Bereich des Kolbenelements 11 grenzt an den Boden 8 der Druckstückeinheit 5 an, so dass ein Niederdruckraum 15 umschlossen wird. Ein weiterer Teil 15a des Niederdruckraums ist außerhalb des Zylinderelements 12 angeordnet und über Kanäle mit dem Niederdruckraum 15 verbunden.

Bei einer Belastung der hydraulischen Dämpfungseinheit 10, bedingt durch eine Bewegung der Zahnstange von dem Lenkritzel weg, erfolgt eine Verkleinerung des Hochdruckraums 14, wodurch die Dämpfungsflüssigkeit, zum Beispiel Hydrauliköl, durch den Drosselspalt 13 gepresst wird und zunächst in den äußeren Niederdruckraum 15a gelangt. Die Verbindungskanäle zwischen Äußer- und Niederdruckraum 15a und inneren Niederdruckraum 15 sind so bemessen, dass im allgemeinen kein Druckabfall zwischen den Teilen 15, 15a des Niederdruckraums entsteht.

Der Boden 8 weist in dem Bereich, in dem er eine Wandung des Niederdruckraums 15 darstellt, eine Öffnung 16 auf. Durch diese Öffnung 16 ist ein Druckanschluss bereitgestellt, mittels dessen eine Beaufschlagung des Niederdruckraums 15, 15a mit einer externen Druckquelle erfolgen kann. Fig. 1 zeigt, dass die Öffnung 16 einen üblichen Hydraulikanschluss 16a trägt, der im allgemeinen mit einer Anschlussleitung versehen ist. Mittels der Anschlussleitung besteht eine Verbindung zu einem Druckspeicher und/oder einer Hydraulikpumpe, wobei die Hydraulikpumpe auch eine Pumpe eines ohnehin an dem Fahrzeug vorgesehenen druckbeaufschlagten Systems sein kann, wie etwa der Hauptmotorölkreislauf oder der Hydraulikkreislauf der zuvor angesprochenen Lenkkraftunterstützung.

Die hydraulische Dämpfungseinheit 10 umfasst zudem ein Ventil 17, das nur in einer Richtung für die Dämpfungsflüssigkeit durchlässig ist. Es handelt sich im einzelnen um eine Ventilkugel 18, die in dem Hochdruckraum 14 angeordnet ist und dichtend gegen eine Durchbohrung 19 des Zwischenbodens 11a anliegt. Die dichtende Anlage wird zudem durch eine Ventilfeder 20 unterstützt, die einerseits gegen die Kugel 18 und andererseits gegen den Boden des Zylinderelements 12 abgestützt ist. Durch dieses einseitig sperrende Ventil 17 wird sichergestellt, dass bei einer Kraftbeaufschlagung des Druckstücks 6 in Kompressionsrichtung (Richtung der Spielvergrößerung zwischen Lenkritzel und Zahnstange) die Dämpfungsflüssigkeit nur durch die Drossel 13 aus dem Hochdruckraum austreten kann. Die Nachführung des Druckstücks 6 bei entsprechendem Nachgeben der Zahnstange 2 erfolgt kraftbeaufschlagt durch die Feder 9. Hierbei kann die Ventilkugel 18 sich öffnen, so dass der Hochdruckraum 14 sich während seiner Expansion schnell und widerstandsarm mit Dämpfungsflüssigkeit füllt.

Es ist zu berücksichtigen, dass der Absolutdruck auf der Zahnstangenseite des Druckstücks 6 in der Regel Atmosphärendruck ist. Daher bedeutet die Beaufschlagung der hydraulischen Dämpfungseinheit 10 durch die Druckquelle über den Druckanschluss 16 eine Erhöhung beziehungsweise eine Einstellbarkeit der auf der Zahnstange 2 lastenden Andruckkraft, welche im vorliegenden Ausführungsbeispiel zu der Kraft der Feder 9 addiert ist. Grundsätzlich kann bei geeigneter Auslegung der Querschnitte und der Drücke auch auf die Feder 9 verzichtet werden, um eine ausreichende Andruckkraft auf die Zahnstange 2 zu erreichen.

Zur Erlangung einer dauerhaften Abdichtung des druckbeaufschlagten Bereichs ist zwischen dem Druckstück 6 und einer zylindrischen Fortsetzung 8a des Bodens 8, an der das Druckstück 6 ebenfalls geführt ist, eine Ringdichtung 21 vorgesehen. Eine weitere Ringdichtung 22 ist zwischen einem Außenumfang des Druckstücks 6 und einer Innenwandung des Gehäuses 1a vorgesehen.

## Patentansprüche

1. Druckstückeinheit für ein Lenkgetriebe, umfassend
ein Druckstückgehäuse (1a),
ein zu dem Druckstückgehäuse (1a) verschiebbar aufgenommenes Druckstück (6) mit Wirkflächen (7) zur Anlage an einer Zahnstange (2), und
eine hydraulische Dämpfungseinheit (10),
wobei die hydraulische Dämpfungseinheit (10) einen Hochdruckraum (14), einen Niederdruckraum (15) und eine zwischen Hochdruckraum und Niederdruckraum angeordnete Drossel (13) umfasst,
wobei Hochdruckraum (14), Niederdruckraum (15) und Drossel (13) in einem von dem Druckstückgehäuse (1a) und dem Druckstück (6) gebildeten Bereich angeordnet sind,
**dadurch gekennzeichnet,**
**dass** die Druckstückeinheit (5) einen Druckanschluss (16) umfasst, wobei der Niederdruckraum (15) zumindest wahlweise über den Druckanschluss (16) durch eine externe Quelle mit Druck beaufschlagbar ist.

2. Druckstückeinheit nach Anspruch 1, **dadurch gekennzeichnet, dass** die hydraulische Dämpfungseinheit (10) ein Zylinderelement (12) und ein in dem Zylinderelement (12) geführtes Kolbenelement (11) aufweist, wobei die Drossel (13) im wesentlichen durch einen zwischen Kolbenelement (11) und Zylinderelement (12) vorgesehenen Spalt ausgebildet ist.

3. Druckstückeinheit nach Anspruch 2, **dadurch gekennzeichnet, dass** zwischen dem Hochdruckraum (14) und dem Niederdruckraum (15) ein Ventil (17) mit einer Durchlassund einer Sperrrichtung vorgesehen ist.

4. Druckstückeinheit nach Anspruch 2, **dadurch gekennzeichnet, dass** das Gehäuse (1a) einen insbesondere schraubbaren Boden (8) umfasst.

5. Druckstückeinheit nach Anspruch 4, **dadurch gekennzeichnet, dass** der Druckanschluss (16) an dem Boden (8) angeordnet ist.

6. Druckstückeinheit nach Anspruch 4 oder 5, **dadurch gekennzeichnet, dass** der Niederdruckraum (15) unmittelbar an den Boden (8) anschließt.

7. Druckstückeinheit nach einem der Ansprüche 2 bis 6, **dadurch gekennzeichnet, dass** das Zylinderelement (12) gegen das Druckstück (6) abgestützt ist

8. Druckstückeinheit nach einem der vorhergehenden Ansprüche, **dadurch gekennzeichnet, dass** das Druckstück (6) mittels eines Federelements (9) gegen das Gehäuse (1a) abgestützt ist.

9. Druckstückeinheit nach einem der Ansprüche 1 bis 7, **dadurch gekennzeichnet, dass** kein Federelement vorgesehen ist, welches einerseits an dem Druckstück (6) und andererseits an dem Gehäuse (1a) abgestützt ist.

10. Druckstückeinheit nach einem der vorhergehenden Ansprüche, **dadurch gekennzeichnet, dass** der Druckanschluss (16) mit einem Hydrauliksystem (3, 4) einer hydraulischen Lenkkraftunterstützung verbunden ist.

11. Druckstückeinheit nach einem der Ansprüche 1 bis 9, **dadurch gekennzeichnet, dass** der Druckanschluss (16) mit einem Öldruck eines Fahrzeughauptmotors beaufschlagt ist.

12. Druckstückeinheit nach einem der Ansprüche 1 bis 9, **dadurch gekennzeichnet, dass** der Druckanschluss (16) mittels einer Hydraulikpumpe einstellbar druckbeaufschlagbar ist.

13. Druckstückeinheit nach einem der vorhergehenden Ansprüche, **dadurch gekennzeichnet, dass** der Druckanschluss (16) mit einem betätigbaren Absperrventil verbunden ist.

14. Druckstückeinheit nach einem der vorhergehenden Ansprüche, **dadurch gekennzeichnet, dass** zwischen der Druckquelle und dem Druckanschluss (16) ein Speicherraum vorgesehen ist.

15. Druckstückeinheit nach einem der vorhergehenden Ansprüche, **dadurch gekennzeichnet, dass** der in dem Niederdruckraum (15) durch den Druckanschluss (16) anliegende Druck in Abhängigkeit von einer Fahrsituation, insbesondere einer Fahrgeschwindigkeit, veränderbar ist.
